# EUROPÄISCHE PATENTSCHRIFT

(11) **EP 1 294 468 B1**
(45) Veröffentlichungstag und Bekanntmachung des Hinweises auf die Patenterteilung: **15.10.2003**
(21) Anmeldenummer: 02737857.9
(22) Anmeldetag: 05.06.2002
(51) Int. Cl.: B01D 53/04, B01D 46/52, B01D 46/42

(54) **VERFAHREN ZUM VERSIEGELN DER SCHNEIDKANTEN BAHNENFÖRMIGEN FILTERMATERIALS**
METHOD FOR SEALING THE CUT EDGES OF WEB-SHAPED FILTER MATERIAL
PROCEDE POUR REVETIR LES ARETES DE MATERIAUX DE FILTRATION EN BANDE

(30) Priorität: 27.06.2001 DE 10130919
(43) Veröffentlichungstag der Anmeldung: 26.03.2003
(73) Patentinhaber: MAHLE Filtersysteme GmbH, 70376 Stuttgart (DE)
(72) Erfinder: SCHNEIDER, Horst, 71336 Waiblingen (DE); WAIBEL, Hans, 71686 Remseck/Aldingen (DE)
(74) Vertreter: Patentanwalts-Partnerschaft, Rotermund + Pfusch + Bernhard
(86) Internationale Anmeldenummer: DE0202032
(87) Internationale Veröffentlichungsnummer: WO03002234

(56) Entgegenhaltungen:
- DE-A- 19 524 677
- DE-A- 19 700 340
- DE-A- 19 844 874
- DE-C- 4 027 272
- GB-A- 2 018 148

## Beschreibung

Die Erfindung betrifft ein Verfahren nach dem Oberbegriff des Patentanspruchs 1.

Schneidkanten von gattungsgemäßem Filtermaterial werden bisher nach Abschluß des Schneidprozesses durch auf die Schneidkanten aufgebrachtes Dichtmaterial versiegelt (DE 198 44 874 A1).

Die Erfindung beschäftigt sich mit dem Problem, das gattungsgemäße Verfahren zu rationalisieren.

Gelöst wird dieses Problem durch ein gattungsgemäßes Verfahren mit dem kennzeichnenden Merkmal des Anspruchs 1.

Die Erfindung beruht auf dem allgemeinen Gedanken, denjenigen Bereich des Bahnenmaterials, in dem der Trennschnitt erfolgen soll, in einem den Trennschnitt beidseitig schmal begrenzenden Bereich mit einer Flüssigkeit zu durchtränken, die beim Durchführen des Trennschnittes automatisch eine für eine Versiegelung der Trennschnittkanten ausreichende Verfestigung erfährt. Hierdurch wird ein zusätzlicher Bearbeitungsschritt zum Versiegeln der Schneidkanten nach deren Erzeugung vermieden. Außerdem wird ein äußerst geringer Einsatz an Versiegelungsmaterial benötigt. Besonders vorteilhaft ist das Verfahren beim Abschneiden von aktivkohlehaltigem Filtermaterial.

Zweckmäßige Ausgestaltungen sind Gegenstand der Unteransprüche und werden im Zusammenhang mit einem bevorzugten Ausführungsbeispiel noch näher erläutert werden.

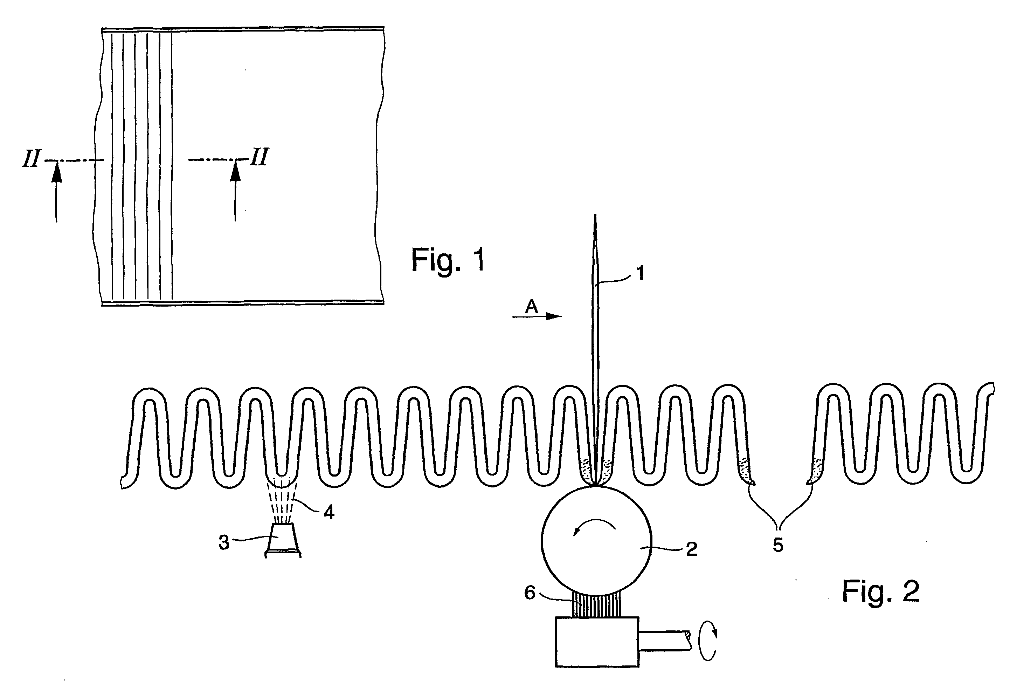

Dieses Ausführungsbeispiel ist in der Zeichnung dargestellt. In dieser zeigen
- Fig. 1: eine Draufsicht auf ein zick-zack-förmig gefaltetes Filterbahnmaterial,
- Fig. 2: einen Schnitt nach Linie II-II des Filterbahnmaterials nach Fig. 1 unter Darstellung des Abschneide- und Versiegelungsprozesses.

Der Endbereich eines Endlos-Filterbahnmaterials wird zick-zack-förmig gefaltet. In diesem Filterbahnbereich erfolgt ein Abschneiden von zu Filterelementen verarbeitbaren Filterbahnabschnitten.

Das Abtrennen erfolgt in einem Faltental mittels eines quer zur Filterbahn rotierenden Schneidmessers 1, das gegen einen als drehbare Walze 2 ausgebildeten Amboß arbeitet. Der Umfang der Walze 2 kann kreisförmig oder polygonal ausgebildet sein. Dabei wird das Filterbahnmaterial zwischen Schneidmesser 1 und Walze 2 liegend unter dem Druck des Schneidmessers 1 zertrennt.

Das Filterbahnmaterial wird in Richtung des Pfeiles A zur Wiederholung des vorgenannten Schneiprozesses transportiert. Derjenige Bereich des Filterbahnmaterials, in dem eine Durchtrennung erfolgen soll, wird zeitlich und örtlich vor der Durchtrennung mittels einer Spritzdüse 3 mit einer Dicht-Flüssigkeit 4 durchtränkt, wobei die Flüssigkeit zur Erzielung einer vollständigen Durchtränkung unter Druck in das Filtermaterial eingespritzt wird. In dem Filterbahnmaterial befinden sich zwischen der Außenummantelung des Filterbahnmaterials gegenüber dem Filterbahngrundmaterial ungebundene feine Partikel wie beispielsweise Aktivkohlepartikel. Die in das Filtermaterial eingespritzte Flüssigkeit ist eine Latex-Dispersion einer an sich bekannten Zusammensetzung, die eine klebend wirkende Verfestigung der Flüssigkeit unter Ausübung eines Druckes auf diese Flüssigkeit ermöglicht.

Beim Trennen des Filterbahnmaterials zwischen Schneidmesser 1 und Walze 2 bewirkt der von dem Schneidmesser 1 auf das Filterbahnmaterial ausgeübte Druck die gewünschte Verfestigung der Tränk-Flüssigkeit. Damit sind die Schneidkanten 5 des Filterbahnmaterials mit Abschluß des Schneidprozesses automatisch ausreichend gegen ein Austreten der im Inneren des Filterbahnmaterials ungebunden vorliegenden Partikel ausreichend geschützt.

Die Walze 2 ist drehbar gelagert. Sie wird nach jedem Schneidprozeß umfangsmäßig derart verdreht, daß die Auflage des Filterbahnmaterials für den nächsten Schneidprozeß in einem Oberflächenbereich der Walze 2 erfolgt, der demjenigen Bereich, in dem der vorhergehende Schneidprozeß erfolgt ist, benachbart ist. Der Grund hierfür ist, daß die Bereiche, in denen ein Schneidprozeß auf der Walze 2 abgelaufen ist, vor dem Einsatz für einen neuen Schneidprozeß von beim Schneidprozeß auf der Walzenoberfläche angelagerter Tränk-Flüssikgeit gereinigt werden können. Die Reinigung kann mittels einer rotierenden Bürste 6 erfolgen.

Das Schneidmesser 1 ist als eine runde, drehbar gelagerte Scheibe ausgebildet, die während des Schneidprozesses quer zur Filterbahn verfahren wird. Auch die Reinigungs-Bürste 6 kann quer zur Filterbahn während des Reinigungsprozesses verfahren werden.

## Patentansprüche

1. Verfahren zum Versiegeln der sich beim Abschneiden von Filtermaterial aus bahnenförmigem Ausgangsmaterial ergebenden Schneidkanten, bei dem
- der innerhalb einer äußeren Ummantelung liegende Filtermaterialbereich von dort zumindest teilweise ungebunden vorliegenden feinen Partikeln durchsetzt ist, und
- ein Schneidmesser das während des Schneidprozesses auf einem Amboß aufliegende Filtermaterial unter Ausübung eines etwa senkrecht auf das zu durchtrennende Material wirkenden Druckes durchtrennt,
**dadurch gekennzeichnet,**
**daß** der Trennschnitt in einem zeitlich kurz vor dem Durchführen des Trennschnittes mit einer unter Druck verfestigbaren Flüssigkeit getränkten Bereich erfolgt.

2. Verfahren nach Anspruch 1
**dadurch gekennzeichnet,**
**daß** der Amboß als eine kreiszylindrische Walze (2) ausgebildet ist und nach jedem Trennschnitt um einen Umfangsteilbereich verdreht wird.

3. Verfahren nach Anspruch 2,
**dadurch gekennzeichnet,**
**daß** der auf der Amboß-Walze (2) erfolgende Trennschnitt jeweils auf einem zuvor gereinigten Abschnitt der Walze (2) erfolgt.

4. Verfahren nach Anspruch 3,
**dadurch gekennzeichnet,**
**daß** die Reinigung der Amboß-Walzenoberfläche über aufeinanderfolgende Umfangsteilabschnitte entsprechend abschnittsweise erfolgt.

5. Verfahren nach Anspruch 4,
**dadurch gekennzeichnet,**
**daß** die Umfangsteilabschnitte der Amboß-Walze (2) von einer rotierenden Bürste gereinigt werden.

6. Verfahren nach einem der vorhergehenden Ansprüche,
**dadurch gekennzeichnet,**
**daß** die Flüssigkeit, mit der das Filtermaterial getränkt wird, eine Latex-Dispersion ist.

7. Verfahren nach einem der vorhergehenden Ansprüche,
**dadurch gekennzeichnet,**
**daß** die Tränk-Flüssigkeit unter Druck in das Filterbahnmaterial eingepresst wird.

8. Verfahren nach Anspruch 7,
**dadurch gekennzeichnet,**
**daß** die Tränkflüssikgeit mittels einer über die Bahnbreite geführten Spritzdüse (3) eingespritzt wird.

## Claims

1. A method for sealing the cut edges which result when filter material is cut from web shaped starting material, in which method
- the filter material area situated within an outer casing is at least partly interspersed with fine particles which are present therein in an unbound state; and
- a cutter blade separates the filter material, which during the cutting process rests against an anvil, by exerting pressure which acts approximately perpendicularly on the material to be separated,
**characterised in that**
the severance cut takes place in an area which shortly prior to carrying out the severance cut has been impregnated with a liquid which is solidifiable under pressure.

2. The method according to claim 1,
**characterised in that**
the anvil is a circular cylindrical roller (2) which after each severance cut is rotated by a partial circumferential area.

3. The method according to claim 2,
**characterised in that**
each separation cut which takes place on the anvil roller (2) takes place on a section of the roller (2) which has previously been cleaned.

4. The method according to claim 3,
**characterised in that**
cleaning of subsequent partial circumferential sections of the anvil-roller surface takes place in sections accordingly.

5. The method according to claim 4,
**characterised in that**
the partial circumferential sections of the anvil roller (2) are cleaned by a rotating brush.

6. The method according to any one of the preceding claims,
**characterised in that**
the liquid with which the filter material is impregnated is a latex dispersion.

7. The method according to any one of the preceding claims,
**characterised in that**
the impregnation liquid is pressed into the filter web material under pressure.

8. The method according to claim 7,
**characterised in that**
the impregnation liquid is sprayed in by means of a spray nozzle (3) which is guided along the width of the web.

## Revendications

1. Procédé pour revêtir les arêtes formées lors de la découpe de matériau de filtration d'un matériau initial en forme de bande, dans lequel
- la zone du matériau de filtration, située à l'intérieur d'une gaine extérieure, est chargée de fines particules au moins en partie libres en cet endroit, et
- une lame sectionne le matériau de filtration s'appliquant sur une enclume pendant le processus de coupe, en exerçant une pression qui agit à peu près perpendiculairement sur le matériau à sectionner,
**caractérisé en ce que** la coupe est assurée dans une zone imprégnée de liquide durcissable sous pression juste avant la réalisation de la coupe.

2. Procédé suivant la revendication 1, **caractérisé en ce que** l'enclume est réalisée sous forme d'un cylindre (2) cylindrique circulaire et est tournée d'une zone partielle périphérique après chaque coupe.

3. Procédé suivant la revendication 2, **caractérisé en ce que** la coupe assurée sur le cylindre - enclume (2) est chaque fois réalisée sur une section préalablement nettoyée du cylindre (2).

4. Procédé suivant la revendication 3, **caractérisé en ce que** le nettoyage de la surface du cylindre - enclume est assuré en conséquence par sections sur des sections partielles périphériques successives.

5. Procédé suivant la revendication 4, **caractérisé en ce que** les sections partielles périphériques du cylindre - enclume (2) sont nettoyées par une brosse rotative.

6. Procédé suivant l'une des revendications précédentes, **caractérisé en ce que** le liquide, dont est imprégné le matériau de filtration, est une dispersion de latex.

7. Procédé suivant l'une des revendications précédentes, **caractérisé en ce que** le liquide d'imprégnation est injecté sous pression dans le matériau de filtration en bande.

8. Procédé suivant la revendication 7, **caractérisé en ce que** le liquide d'imprégnation est injecté au moyen d'un pulvérisateur (3) guidé sur la largeur de la bande.
